# EUROPEAN PATENT SPECIFICATION

(11) **EP 0 586 655 B1**
(45) Date of publication and mention of the grant of the patent: **03.06.1998**
(21) Application number: 93906549.6
(22) Date of filing: 18.03.1993
(51) Int. Cl.: H04M 17/00, H04M 15/28, H04M 15/00, H04Q 7/20

(54) **COMMUNICATION SYSTEM WITH CALL CHARGE INFORMATION STORED IN HANDSET**
Kommunikationssystem mit Speicherung der Gebühreninformation im Handapparat
SYSTEME DE TELECOMMUNICATIONS A INFORMATIONS DE TAXATION D'APPELS STOCKEES DANS LE COMBINE

(30) Priority: 28.03.1992 GB 9206854
(43) Date of publication of application: 16.03.1994
(73) Proprietor: MOTOROLA LTD, Basingstoke, Hampshire RG22 4PD (GB)
(72) Inventor: WARWICK, Gerald Anthony, West Street, Tadley RG26 6SX (GB); BARNES, Nigel Everard, Hardy Lane, Basingstoke RG21 1XP (GB)
(74) Representative: Dunlop, Hugh Christopher
(86) International application number: EP9300652
(87) International publication number: WO9320644

(56) References cited:
- EP-A- 0 459 065
- EP-A- 0 463 384
- WO-A-89/10044
- US-A- 5 077 790

## Description

### Background of the Invention

This invention relates to a communication system, such as a telepoint system, comprising a base station and at least one handset and metering means in the base station for metering charge units accrued during a call set up over a radio channel between the base station and the handset.

### Summary of the Prior Art

Telepoint systems typically consist of cordless (radio) handsets or Cordless Portable Parts (CPP), and Cordless Fixed Parts (CFP) which are (relatively fixed) radio base stations, typically sited in the public environment (e.g. stations, shopping precincts, or even on trains), or which can equally be sited in a private or semi-private environment (providing service in a factory site for example). The cordless portable parts are essentially low power cordless telephone handsets, and the telepoint cordless fixed parts are the associated base stations, providing connection to the wired services, e.g. PSTN, or equally providing access via cellular (on the train) to the wired telephony services (PSTN). It is a significant feature of these types of equipment that a handset may not communicate directly with another handset, other than via a base station. Examples of these types of products include CT2 (second generation cordless telephones) and DECT (Digital European Cordless Telephone).

It is general in these cases that the handset user needs to be charged for access to the service, and the handset provides memory storage for account details, in order for the telepoint system operator to trace and subsequently bill the handset user (owner). In addition, there is a secret number stored in the handset's memory, which allows the telepoint base station to verify (either locally, or by some remote method) that the handset is genuinely subscribed to the service.

The secret number may be stored in "clear" or cyphered in the handset, and is cyphered or encrypted on command from the base station, before being sent over the radio interface to the base station. The account details are also stored in the handset (again, either in clear or cyphered), and these may be sent either cyphered or encrypted, or sent in clear over the radio interface to the base station, when the base station requests the handset to do so. This process is known as "authentication", and is the process whereby the account details and other related data (including the secret number) are retrieved from the handset by the base station. A similar process whereby the handset authenticates the base station or network is called "network authentication", where the handset verifies that the network is genuine. The process where the handset is authenticated by the base station or network, and the base station or network is itself authenticated by the handset is called "mutual authentication".

The account details and the secret number stored in the handset are generally known collectively as "registration data", and may include other data fields, controlling access conditions and what sort of calls the subscriber to the service is allowed to make. Typically, the handset provides more than one block of memory for storing the registration data, and these memory blocks are also known as "registration slots".

There are two methods of causing the registration data to be entered into the handset.

The first method is for the process to be done manually, where the details are entered via the keypad of the handset, in a standardised format, and the digits are decoded and stored in the appropriate registration slot within the handset.

The second method is for the data to be stored on command over the radio interface from the base station, where the base station orders the handset to accept and subsequently store in the registration slot some new registration data. This process may be used for the initial storage of registration data in the handset, or for subsequent storage of newer registration data. Some or all of this newer data, or the original data, may be sent entirely in clear or entirely cyphered or a mixture of clear and cyphered by the base station to the handset over the radio interface. This process is known as "Over the Air Registration", or OTAR. It is usual for the process to be done at least partly cyphered for security reasons, and in addition, this process is usually, but not necessarily, entered into only after the handset has performed a network authentication to verify the bona fides of the base station which is commanding the handset to accept new data. This increases the security of the whole system.

Until now, the charging method has been retrospective, in that the user is billed sometime after having made calls rather like a credit or charge card where a transaction takes place and the bill is presented to the card owner or user sometime later, typically in a monthly statement which is done using the card number. Similarly, the telepoint subscriber makes and receives telephone or other PSTN calls and the charges for these services are collated and presented to the user or owner sometime later in a statement; this is done using the account number stored as part of the registration data in the associated registration slot in the handset.

International European Telecommunications Standard 300 131: 1990 describes, in paragraph 7.2.8, an authentication request information element (AUTH REQ) which is issued by a telepoint CFP to initiate a call authentication process. That document, in paragraph 7.2.9, describes an authentication response information element (AUTH RES) which is sent by the CPP in response to an authentication request information element and conveys telepoint registration and authentication parameters to the telepoint CFP. The AUTH RES element includes telepoint registration data (TRD) which is used to transport the CPP details of the telepoint account being used. The document states that specific code allocations for the TRD field are defined by and are the responsibility of telepoint operators.

International patent application WO/91/07856 describes a link identification code that is loaded into a handset. This link identification code includes up to 20 binary coded decimal digits (BCD) - i.e. 80 bits - which can be used as an account number to which the call charges are to be billed. These are the 80 bits of the TRD field described in I-ETS300 131:90 paragraph 7.2.9.

In the field of fixed PSTN pay-phones, it is common to provide a semiconductor chip-card that is paid for in advance and contains information defining a number of charging units for which the card is valid. The card is inserted into a slot in the pay phone and as a call progresses, charge units are metered by the PSTN system and are subtracted from the number stored in the card. When the number of units paid for are used up, the card is discarded.

The common air interface (CAI) standard does not contemplate a pre-pay system as is the case in the field of fixed PSTN pay-phones and no provision is made for such an arrangement. The present invention addresses the problem of providing a pre-pay arrangement within the constraints of the CAI specification.

US 5, 077, 790 discloses a method of secure registration of a cordless unit. EP-A1-0 463 384 relates to a method of accessing a wireless telephone service

According to the present invention, a communication system is provided comprising: at least one base station, and at least one handset having means for setting up a call over a radio channel with the base station and having means for receiving an over-the-air registration sequence from the base station and storing a number (TRD) in non-volatile memory dependent on said over-the-air registration sequence, the base station having metering means for metering charge units accrued during the call between the base station and the handset characterised by: means at the base station for automatically generating a new over-the-air registration sequence to be sent to the handset in response to the metering of charge units and transmitting the new over-the-air registration sequence to the handset and means at the handset for replacing the data stored in non-volatile memory new data dependent on said new over-the-air registration sequence.

Thus, the invention entirely replaces the information in the existing TRD field with new data in response to the metering of a charge unit by the metering means. The process can be repeated for each metered unit and, before encryption, a defined relationship exists between the old and new numbers, where the value of the unit metered defines the relationship.

It is preferred that a new over-the-air registration sequence is generated and transmitted to the handset every time a call unit is metered. Thus, there is no revenue lost to the system if a call is terminated prematurely, for example through loss of signal.

The units metered may be of different sizes depending on the nature of the call. Thus, for international calls, larger units are metered. The new sequence generated bears a predefined relationship to a previous sequence, either received initially, or generated in response to an earlier charge unit metered, wherein the relationship depends only on the size of the unit metered.

The over-the-air registration sequence preferably comprises a first part which is unique to the subscriber, but may be unique to the handset, and a second part which is varied in response to the charge units metered.

### Glossary of Abbreviations

- AUTH-NO: Number of authentication algorithm
- AUTH-REQ: Authentication request information element
- AUTH-RES: Authentication response information element
- BCD: Binary coded decimal
- CFP: Cordless fixed part
- CKEY: Ciphered KEY
- CPP: Cordless portable part
- CT2: Second generation cordless telephones
- DECT: Digital european cordless telephone
- ESN: Electronic serial number
- INCZ: Increment zapp
- ISW: Inbound signalling word
- LSB: Least significant bit
- MSB: Most significant bit
- OPSIC: Operator identification code
- OSW: Outbound signalling word
- OTAR: Over-the-air registration
- PSTN: Public switched telephone network
- RAND: Random number
- TCOS: Telepoint class of service
- TRD: Telepoint registration data
- zapp: deactivate

### Brief Description of the Drawings

Fig. 1 is a drawing of a CFP and a CPP in accordance with the preferred embodiment of the invention.

Fig. 2 is a drawing of an AUTH-REQ element and

Fig. 3 is a drawing of an AUTH-RES element in accordance with an illustrative embodiment of the invention.

### Detailed Description of the Preferred Embodiment

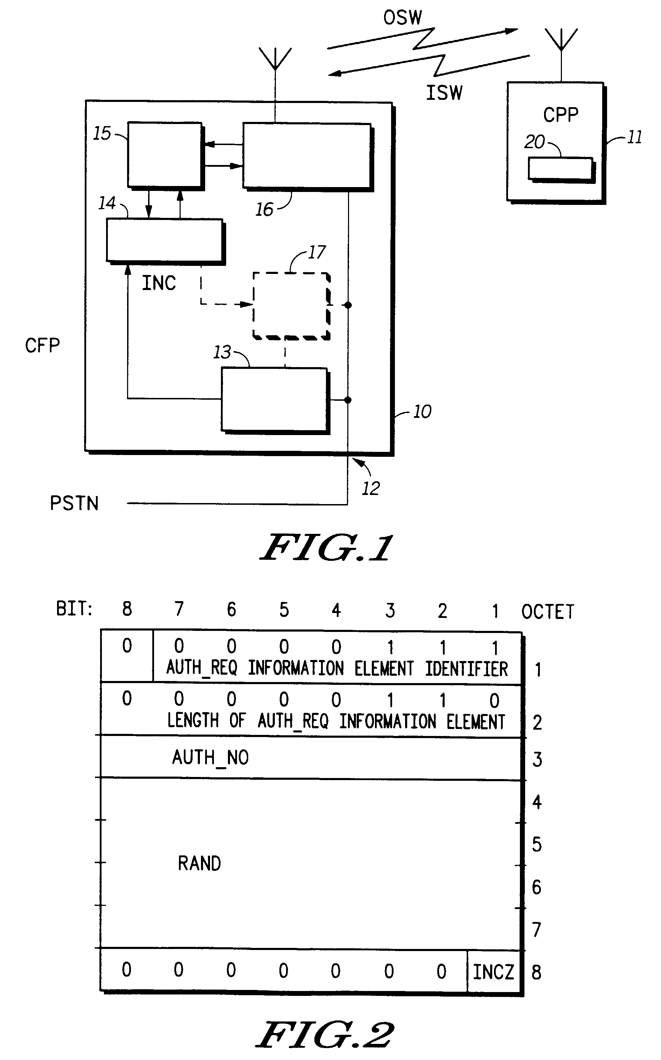

Referring to Fig. 1, there is shown a CFP 10 and CPP 11 in communication over a radio link. The CFP 10 has a PSTN connection 12, a charge unit meter 13, a TRD register 14, an encryption/decryption unit 15 and a cordless transceiver part 16. In dotted outline, there is also shown an optional charge unit accumulator 17. In the CPP, there is shown non-volatile EEPROM memory 20.

The operation of the equipment is as follows.

When the CPP user wishes to initiate a call, he dials a number from his CPP handset and an ISW is sent to the CFP to commence the call process. The CFP transmits an authentication request information element (AUTH-REQ) to the CPP to initiate the call authentication process. An authentication request element as shown in Fig. 2 is transmitted. Referring to the contents of this element, AUTH-NO is used to indicate to the CPP which of the authentication algorithms offered by the CPP is to be used (even if the CPP is only capable of performing one authentication process). RAND is a 32-bit random number generated by the encryption/decryption unit 15 of the CFP to be used by the CPP in the call authentication process. INCZ causes the CPP to increment the contents of a 4-bit zapp field which need not be described in detail.

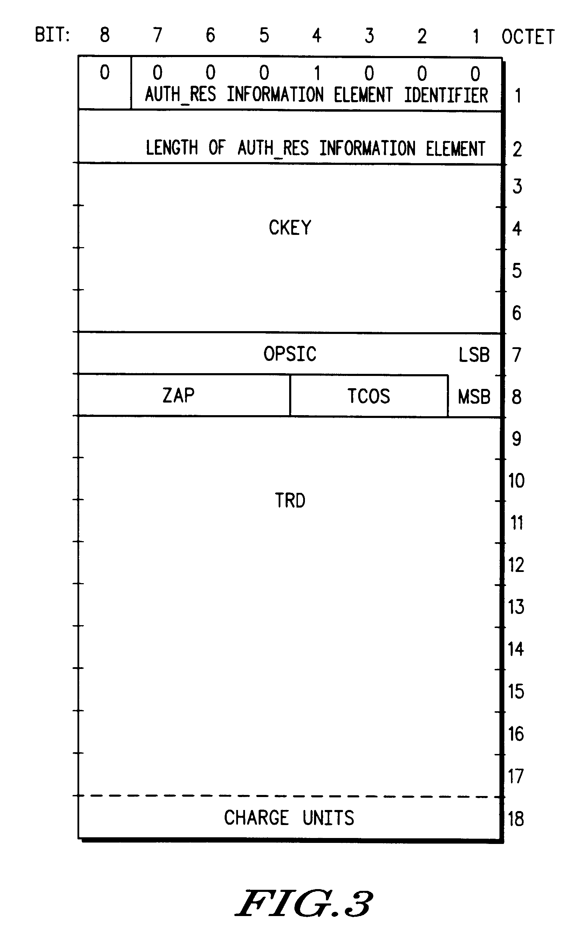

In response to the AUTH-REQ element, the CPP issues an AUTH-RES element conveying telepoint registration and authentication parameters to the CFP. This is shown in Fig. 3.

Referring to the contents of this AUTH-RES element, CKEY is the 32-bit result of the call authentication process calculated by the CPP and returned to the CFP for checking. OPSIC is the operator's identification code. TCOS is used to transport telepoint class of service details from the CPP. The TRD field is used to transport the CPP details of the telepoint account being used. This field, among others, is stored in the EEPROM 20 in the CPP.

The CFP 10 receives the TRD field, decrypts the information in encryption/decryption unit 15 and stores the decrypted account number in register 14. The random number RAND is used in the decryption process.

Once the call is set up, communication proceeds between the CPP and the PSTN via the cordless transceiver unit 16. After a period of time, a metering signal is received from the PSTN and detected by the meter 13. This causes a decrement signal to be passed to the register 14 and a charge unit is deducted from the data in the TRD field. This sets in progress an OTAR registration process as follows. The new account number in register 14 is sent (optionally encrypted in encryption/decryption unit 15) through the cordless transceiver 16 to the CPP 11. On receipt of the OTAR command, the CPP 11 replaces its existing TRD field with the new information received. The new data differs from the previous data in that a charge unit has been deducted from one of the BCD locations set aside for charge units.

The above process is repeated throughout the call each time a charge unit is metered in meter 13.

In parallel with the above arrangement, a prior art arrangement of using a charge unit accumulator 17 can be used, in which on completion of the call, the account from register 14 (which is fixed and not decrypted), together with the total number of units accrued during the call, are downloaded via the PSTN to a central billing station, from which a bill is sent out to the subscriber. This mechanism can be set in operation when the OPSIC field identifies that the operator that has issued the handset is not using a pre-paid type of service.

Thus, the OTAR mechanism is used to provide a type of pre-paid service, where the user or handset owner pre-pays the service provider or telepoint operator for a certain number of units. A preferred feature is that the register 14 has a threshold detector for detecting when the charge units have fallen below a threshold, and means for issuing an instruction via the PSTN to a central billing office, which may be independent of the base station operator, for example a credit-card operator, communicating the TRD field to the central billing office, so that a reminder can be issued to the CPP user alerting him that his units are almost used up or other action can be taken. It can be seen that there is an advantage in that communications to the central billing office are much less frequent than in the prior art arrangement. This saves costs both in PSTN billing costs to the CFP owner and in other billing management costs.

The CPP user can pay the operator for a new quantity of units, whereupon a new "account number" is sent out to all the various base stations as a work order instruction, so that when the user next appears on the system, the ESN of the CPP is sent in an ISW to the CFP and compared with the ESN numbers on the work order. A correspondence is identified showing that this CPP needs to re-register, whereupon the OTAR mechanism is used for its "traditional" purpose and a new TRD field is loaded into the non-volatile memory 20.

As an alternative to a work order arrangement, the user of the handset can be instructed that, when he has paid for more units, he must undergo a re-registration process in which he initiates a key-stroke operation informing the CFP that he wishes to re-register, whereupon the CFP initiates a call through the PSTN to the billing centre and the billing centre replies with a new TRD field which is passed to the CPP and loaded in the non-volatile memory 20.

As a further optional feature, there may be two or more types of unit count stored in the handset. For example, a large unit count and a small unit count. If the user is making a long distant telephone call, where the rate of small unit decrementation would be high, then the large units counter can be used to decrement large units at a lower rate, whereas in the case of a local call being made, the small unit is decremented.

As a further optional feature, the CFP causes data from the TRD field to be transmitted to the CPP in a special message and displayed on the handset display, indicating the number of units of credit remaining. As a further alternative feature, a voice prompt is issued from a prestored message in the CFP, which emerges from the earphone of the CPP. These various mechanisms warn the handset user that credit is running low or has ended.

In summary, the OTAR mechanism is used to provide a type of pre-paid service, where the user or handset owner pre-pays the service provider or telepoint operator for a certain number of units. When units are exhausted, the user arranges new credit by visiting the operator or using a remote mechanism. The new credit is loaded into the handset registration slot using the OTAR mechanism when the user next accesses the network via a suitable base station.

## Claims

1. A communication system comprising:
at least one base station (10), and
at least one handset (11) having means for setting up a call over a radio channel with the base station and having means for receiving an over-the-air registration sequence from the base station and storing a number (TRD) in non-volatile memory (20) dependent on said over-the-air registration sequence,
the base station having metering means (13) for metering charge units accrued during the call between the base station and the handset
characterised by:
means (14) at the base station for automatically generating a new over-the-air registration sequence to be sent to the handset in response to the metering of charge units and transmitting the new over-the-air registration sequence to the handset and
means at the handset for replacing the number stored in non-volatile memory (20) with a new number dependent on said new over-the-air registration sequence.

2. A communication system according to claim 1, wherein the means at the base station for automatically generating the new over-the-air registration sequence comprises means for increasing or decreasing a registration number received from the handset and means for comparing at least a part of the increased or decreased number with a threshold and performing an action in response thereto.

3. A communication system according to claim 2, wherein the base station has a connection (12) to a public switched telephone network and wherein the means for performing the action comprise automatic dialling means for initiating a call to a predetermined number.

4. A communication system according to claim 2 or 3, wherein the base station comprises means for storing a prerecorded voice message and wherein the means for performing the action comprises means for transmitting the message to the handset for enunciation at an earpiece at the handset.

5. A communication system according to any one of the preceding claims, wherein the handset further comprises a display and means for displaying information received from the base station dependent on at least a portion of the new registration sequence.

6. A communication system according to any one of the preceding claims, wherein the base station comprises means (13) for metering charge units of different magnitudes and means for altering a registration number received from the handset by different amounts dependent on the metering of different magnitude charge units by the metering means so as to generate the new registration sequence.

## Patentansprüche

1. Kommunikationssystem mit:
zumindest einer Basisstation (10), und
zumindest einem Handapparat (11) mit einer Einrichtung zum Erstellen eines Anrufs über einen Radiokanal mit der Basisstation und mit einer Einrichtung zum Empfangen einer Über-Luft-Registrierungssequenz von der Basisstation und Speichern einer Zahl (TRD) in einem nichtflüchtigen Speicher (20) in Abhängigkeit von der Über-Luft-Registrierungssequenz,
wobei die Basisstation eine Meßeinrichtung (13) zum Messen von Gebühreneinheiten aufweist, welche sich während des Anrufs zwischen der Basisstation und dem Handapparat ansammeln,
gekennzeichnet durch:
eine Einrichtung (14) an der Basisstation zum automatischen Erzeugung einer neuen Über-Luft-Registrierungssequenz, die an den Handapparat ansprechend auf das Messen von Gebühreneinheiten zu senden ist, und zum Übertragen der neuen Über-Luft-Registrierungssequenz an den Handapparat und
eine Einrichtung am Handapparat zum Ersetzen der in dem nichtflüchtigen Speicher (20) gespeicherten Zahl durch eine neue Zahl in Abhängigkeit von der neuen Über-Luft-Registrierungssequenz.

2. Kommunikationssystem nach Anspruch 1, dadurch gekennzeichnet, daß die Einrichtung an der Basisstation zum automatischen Erzeugen der neuen Über-Luft-Registrierungssequenz einer Einrichtung zum Erhöhen oder Erniedrigen einer Registrierungszahl aufweist, die von dem Handapparat empfangen wird, sowie eine Einrichtung zum Vergleichen zumindest eines Teils der erhöhten oder erniedrigten Zahl mit einer Schwelle und zum Durchführen einer Aktion als Reaktion darauf.

3. Kommunikationssystem nach Anspruch 2, dadurch gekennzeichnet, daß die Basisstation eine Verbindung (12) mit einem öffentlichen Schalttelefonnetzwerk aufweist, und daß die Einrichtung zum Durchführen der Aktion eine automatische Wähleinrichtung zum Initiieren eines Rufs mit einer vorbestimmten Nummer aufweist.

4. Kommunikationssystem nach Anspruch 2 oder 3, dadurch gekennzeichnet, daß die Basisstation eine Einrichtung zum Speichern einer im voraus aufgenommenen Stimmnachricht aufweist und daß die Einrichtung zum Durchführen der Aktion eine Einrichtung zum Übertragen der Nachricht an den Handapparat zur Verlautbarung an einem Hörteil am Handapparat aufweist.

5. Kommunikationssystem nach einem der vorhergehenden Ansprüche, dadurch gekennzeichnet, daß der Handapparat weiterhin eine Anzeige und eine Einrichtung zum Anzeigen von Informationen aufweist, die von der Basisstation abhängig von zumindest einem Teil der neuen Registrierungssequenz empfangen wird.

6. Kommunikationssystem nach einem der vorhergehenden Ansprüche, dadurch gekennzeichnet, daß die Basisstation eine Einrichtung (13) zum Messen von Gebühreneinheiten verschiedener Größen und eine Einrichtung zum Ändern einer Registrierungsnummer, welche von dem Handapparat empfangen wird durch verschiedene Beträge abhängig von der Messung der Gebühreneinheiten verschiedener Größen durch die Meßeinrichtung, aufweist, um so die neue Registrierungssequenz zu erzeugen.

## Revendications

1. Système de communication comprenant :
- au moins un poste de base (10); et
- au moins un combiné (11) possédant un moyen pour établir un appel sur un canal radio avec le poste de base et possédant un moyen pour la réception d'un séquence d'enregistrement radioélectrique à partir du poste de base et pour le stockage d'un numéro (TRD) dans une mémoire non volatile (20) selon ladite séquence d'enregistrement radioélectrique;
le poste de base possédant un moyen de comptage (13) pour le décompte des unités de facturation accumulées lors de l'appel entre le poste de base et le combiné,
système caractérisé par :
- un moyen (14) sur le poste de base pour la génération automatique d'une nouvelle séquence d'enregistrement radioélectrique à envoyer au combiné en réponse au décompte des unités de facturation et pour la transmission de la nouvelle séquence d'enregistrement radioélectrique vers le combiné; et
- un moyen sur le combiné pour remplacer le numéro stocké dans la mémoire non volatile (20) par un nouveau numéro dépendant de ladite nouvelle séquence d'enregistrement radioélectrique.

2. Système de communication selon la revendication 1, dans lequel le moyen sur le poste de base pour la génération automatique de la nouvelle séquence d'enregistrement radioélectrique comprend un moyen pour augmenter ou diminuer un nombre d'enregistrement reçu à partir du combiné et un moyen pour comparer au moins une partie du nombre augmenté ou diminué avec un seuil et pour effectuer une action en réponse.

3. Système de communication selon la revendication 2, dans lequel le poste de base possède une connexion (12) avec un réseau téléphonique public commuté et dans lequel le moyen effectuant l'action comprend un moyen de numérotation automatique pour amorcer un appel vers un numéro prédéterminé.

4. Système de communication selon la revendication 2 ou 3, dans lequel le poste de base comprend un moyen pour le stockage d'un message vocal enregistré à l'avance et dans lequel le moyen effectuant l'action comprend un moyen pour envoyer le message au combiné pour une sortie par un écouteur du combiné.

5. Système de communication selon l'une quelconque des revendications précédentes, dans lequel le combiné comprend, de plus, un affichage et un moyen pour afficher une information reçue du poste de base selon au moins une partie de la nouvelle séquence d'enregistrement.

6. Système de communication selon l'une quelconque des revendications précédentes, dans lequel le poste de base comprend un moyen (13) pour le décompte d'unités de facturation de valeurs différentes et un moyen pour modifier un numéro d'enregistrement reçu du combiné selon des valeurs différentes dépendant du décompte des unités de facturation de valeurs différentes à l'aide du moyen de décompte de façon à générer la nouvelle séquence d'enregistrement.
